# EUROPÄISCHE PATENTSCHRIFT

(11) **EP 0 937 212 B1**
(45) Veröffentlichungstag und Bekanntmachung des Hinweises auf die Patenterteilung: **05.06.2002**
(21) Anmeldenummer: 97950188.9
(22) Anmeldetag: 13.11.1997
(51) Int. Cl.: F16D 65/16

(54) **BREMSE FÜR EINE HYDRAULISCHE FAHRZEUGBREMANLAGE, DICHTRING FÜR EINE SOLCHE BREMSE UND VERFAHREN ZU DESSEN HERSTELLUNG**
BRAKE FOR A HYDRAULIC VEHICLE BRAKING SYSTEM, SEALING RING FOR SUCH A BRAKE AND PROCESS FOR PRODUCING THE SAME
FREIN POUR LE SYSTEME HYDRAULIQUE DE FREINAGE D'UN VEHICULE, BAGUE D'ETANCHEITE POUR CE FREIN ET SON PROCEDE DE FABRICATION

(30) Priorität: 15.11.1996 DE 19647434
(43) Veröffentlichungstag der Anmeldung: 25.08.1999
(73) Patentinhaber: Lucas Industries Limited, West Midlands B90 4LA (GB)
(72) Erfinder: SANITATE, Franco, D-56077 Koblenz (DE); CONRAD, Willibrord, D-56299 Ochtendung (DE)
(74) Vertreter: Beyer, Andreas, Dr.
(86) Internationale Anmeldenummer: EP9706347
(87) Internationale Veröffentlichungsnummer: WO9822726

(56) Entgegenhaltungen:
- EP-A- 0 144 552
- GB-A- 1 144 363

## Beschreibung

Die Erfindung betrifft eine Bremse für eine hydraulische Fahrzeugbremsanlage gemäß dem Oberbegriff des Anspruchs 1, einen Dichtring für eine solche Bremse, ein Verfahren zur Herstellung eines solchen Dichtringes, sowie ein Verfahren zur Beschichtung eines Bremskolbens.

Hydraulische Fahrzeugscheibenbremsen weisen mindestens eine Kolben-Zylinder-Einheit auf, mittels der ein zugehöriger Bremsbelag, der aus einer Belagträgerplatte und einem darauf befestigten Reibbelag besteht, gegen die Bremsscheibe gepreßt werden kann, um die Drehbewegung eines mit der Bremsscheibe verbundenen Rades abzubremsen. Ein Anpressen des Bremsbelages an die Bremsscheibe wird erreicht, indem der Kolben durch Hydraulikdruck in Richtung auf die Bremsscheibe verschoben wird. Damit dieser Vorgang einwandfrei funktioniert, muß der Kolben gegenüber der Bohrung bzw. gegenüber dem Zylinder, in der bzw. in dem er aufgenommen ist, abgedichtet sein. Diese Flüssigkeitsabdichtung wird üblicherweise durch eine ringförmige Elastomerdichtung erreicht, die normalerweise in einer Nut der Bohrung bzw. des Zylinders gehalten ist und deren radial innere Umfangsfläche an der Mantelfläche des Kolbens anliegt. Zumeist hat der Elastomerdichtring einen quadratischen oder rechteckigen Querschnitt.

Beim Bremsen bewegt der Kolben sich durch Hydraulikdruck in Richtung auf die Bremsscheibe und der Elastomerdichtring wird von dem sich verschiebenden Kolben etwas mitgenommen und dadurch sowie durch den Hydraulikdruck etwas verformt. Bei einer Entlastung der Bremse, d.h. beim Wegfall des Hydraulikdrucks, übt der verformte Elastomerdichtring eine Rückstellkraft auf den Kolben aus und nimmt diesen ein Stück in Richtung von der Bremsscheibe weg mit. Dieses Verhalten ist durchaus erwünscht, denn es stellt den Bremskolben zurück und sorgt dafür, daß sich nach Beendigung einer Bremsung zwischen dem Reibbelag und der Bremsscheibe ein sogenanntes Lüftspiel einstellt. Es wird hierzu auf die deutsche Patentschrift 1 600 008 verwiesen, in der dieses Verhalten ausführlich beschrieben ist. Um das zuvor beschriebene Verhalten des Elastomerdichtringes zu unterstützen, wird häufig sogar die bremsbelagseitige Seitenwand der Nut abgeschrägt, in der der Dichtring gehalten ist, d.h. der Nutquerschnitt erweitert sich vom Nutgrund aus (siehe hierzu das französische Patent 1 504 679). Damit der Dichtring den Bremskolben zurückstellen kann, ist eine gewisse Haftung zwischen den zusammenwirkenden Flächen des Dichtringes und des Bremskolbens erforderlich. Zu gute Gleiteigenschaften zwischen diesen Flächen würden ein Rückstellen des Kolbens verhindern, da letzterer nahezu sofort relativ zum Dichtring gleitend verschoben werden würde, wodurch keine Verformung des Dichtringes und damit auch keine Rückstellkraft mehr vorhanden wäre.

Andererseits ist unter bestimmten Umständen ein Gleiten des Bremskolbens relativ zum Dichtring sehr erwünscht. Dies ist beispielsweise beim Zusammenbau der Bremse der Fall. Hier muß der Bremskolben, nachdem der Dichtungsring in die ihn aufnehmende Nut in der Zylinderwandung gesetzt worden ist, in den Zylinder geschoben werden. Würden Kolben und Dichtring relativ zueinander nicht gleiten können, wäre es sehr wahrscheinlich, daß sich der Dichtring in der Nut verdrehen würde oder daß er beschädigt und teilweise abgeschert würde. Ein Gleiten des Bremskolbens relativ zum Dichtring ist aber auch in bestimmten Betriebszuständen der Bremse notwendig, beispielsweise dann, wenn die Dicke des Reibbelages sich durch Abnutzung verringert, so daß der Bremskolben entsprechend weiter in Richtung auf die Bremsscheibe verschoben werden muß, um den Reibbelag an die Bremsscheibe anzulegen. Unter solchen Umständen wird die Verformbarkeit des Elastomerdichtringes überschritten und der Kolben muß relativ zum Dichtring gleiten, um eine neue Stellung relativ zum Dichtring einzunehmen. Ein Gleiten des Bremskolbens relativ zum Dichtring kann auch bei sehr starken Bremsungen erforderlich werden, da sich dann aufgrund der großen Kräfte das Bremsgehäuse aufweitet, das Material des Reibbelages komprimiert wird etc., so daß ein entsprechend größerer Verschiebeweg des Bremskolbens erbracht werden muß.

Zur Förderung der Gleiteigenschaften zwischen einem Bremskolben und dem ihn abdichtenden Elastomerdichtungsring ist es seit langem üblich, den Dichtring vor der Montage in einer Montageflüssigkeit zu tränken. Solchermaßen getränkte Dichtungsringe werden in die Nut in der Zylinderwandung der Kolben-Zylinder-Einheit eingesetzt und der zugehörige Kolben kann dann ohne weiteres in den Zylinder eingeschoben werden, ohne daß der Dichtring dabei beschädigt wird.

Die Verwendung einer Montageflüssigkeit führt allerdings auch zu einer Reihe von Problemen. So muß darauf geachtet werden, daß die Dichtungsringe nicht zu lange in der Montageflüssigkeit verweilen. Auch lösen sich in der Montageflüssigkeit Bestandteile der Dichtungsringe, so daß die Montageflüssigkeit öfter gewechselt werden muß. Weiterhin müssen die in der Montageflüssigkeit getränkten Dichtungsringe innerhalb einer bestimmten Zeit weiterverarbeitet, d.h. montiert werden. Darüber hinaus kann die Montageflüssigkeit bei der Erstbefüllung einer Fahrzeugbremsanlage mit Hydraulikflüssigkeit zu unerwünschten Nebeneffekten, wie beispielsweise einer Schaumbildung führen.

Der Erfindung liegt die Aufgabe zugrunde, eine Bremse anzugeben, bei deren Zusammenbau auf die Verwendung von Montageflüssigkeit verzichtet werden kann und bei der die Gleiteigenschaften zwischen dem Bremskolben und dem Elastomerdichtungsring derart sind, daß ein gutes Gleiten des Bremskolbens relativ zum Dichtungsring ermöglicht ist, ohne dabei jedoch die erwünschte Rückstelleigenschaft des Dichtungsringes zu verlieren.

Diese Aufgabe ist ausgehend von einer gattungsgemäßen Bremse erfindungsgemäß dadurch gelöst, daß der Dichtring und/oder wenigstens die Mantelfläche des Bremskolbens mit einem Lack beschichtet ist, der ein organisches Bindemittel und einen Festschmierstoff enthält. Als organisches Bindemittel wird bevorzugt Wachs mit Harzen eingesetzt. Das organische Bindemittel dient als Matrix für den Festschmierstoff und bindet letzteren.

Bevorzugt ist der Festschmierstoff ein solcher, der auf Polytetrafluorethylen, Graphit oder Molybdändisulfid basiert.

Besonders bevorzugt ist dann, wenn der Bremskolben mit Lack beschichtet ist, auch der Übergangsbereich zwischen der Mantelfläche und dem Kolbenboden des Bremskolbens mit dem Lack beschichtet.

Die auf den Bremskolben aufgebrachte Lackschicht ist bevorzugt eingebrannt, um ihre Stabilität und insbesondere ihre Abriebfestigkeit zu erhöhen. Beim Einbrennen ist darauf zu achten, daß die Lackschicht die gewünschten Oberflächeneigenschaften behält, insbesondere also nicht zu rauh wird.

Die Dicke der Lackschicht beträgt vorteilhaft etwa 5 µm bis etwa 15 µm.

Gelöst wird die eingangs genannte Aufgabe auch durch einen Elastomerdichtring für eine Fahrzeugscheibenbremse, der mit einem Lack beschichtet ist, der ein organisches Bindemittel und einen Festschmierstoff enthält. Der Festschmierstoff basiert bevorzugt auf Polytetrafluorethylen, Graphit oder auf Molybdändisulfid. Vorzugsweise ist der gesamte Dichtring mit dem Lack beschichtet.

Vorteilhaft weist die Dichtfläche des Dichtrings vor dem Aufbringen der Lackschicht taschenförmige Vertiefungen auf. Auf diese Weise wird beim fertig beschichteten Dichtring eine Depotwirkung des Festschmierstoffes auf der Dichtfläche des Dichtringes erzielt, die über lange Zeit gleichbleibende Eigenschaften des erfindungsmäßen Dichtrings sichert.

Ein bevorzugtes Verfahren zur Herstellung erfindungsgemäß beschichteter Dichtringe umfaßt das Einbringen von Elastomerdichtringen in eine Trommel, und das allseitige Benetzen der eingebrachten Dichtringe mit einem flüssigen Lack - der ein organisches Bindemittel und einen Festschmierstoff enthält - durch Drehen der Trommel, wobei der flüssige Lack sich in der Trommel befindet. Alternativ kann der flüssige Lack auch beim Drehen der Trommel in die Trommel gesprüht werden, um die Dichtringe mit dem Lack zu benetzen. Das erfindungsgemäße Herstellungsverfahren umfaßt weiterhin das Entfernen des überschüssigen Lackes von den Dichtringen durch schnelles Drehen der Trommel und Ablassen des überschüssigen, flüssigen Lackes aus der Trommel sowie das Trocknen der mit Lack beschichteten Dichtringe. Die Trocknung findet bevorzugt bei einer Temperatur von 60 bis 70 °C statt.

Als organisches Bindemittel für den Festschmierstoff werden bevorzugt Wachse mit Harzen verwendet.

Bevorzugt enthält der im erfindungsgemäßen Verfahren eingesetzte flüssige Lack als Lösemittel ein Gemisch aus Ester und Alkohol. Es hat sich als günstig herausgestellt, wenn der flüssige Lack bis zu 20 Gew.-% organisches Bindemittel mit Festschmierstoff und etwa 80 Gew.-% Lösemittel enthält. Wie zuvor bereits ausgeführt, kann der Festschmierstoff ein auf Polytetrafluorethylen, Graphit oder Molybdändisulfid basierender Festschmierstoff sein.

Alternativ können die Dichtungsringe mit Lack beschichtet werden, indem sie auf ein Band, vorzugweise ein Förderband, gelegt und auf diesem Band mit Lack besprüht werden. Diese Beschichtungsmethode erfordert jedoch ein Wenden der Dichtringe. Die besprühten Dichtringe können auf dem Band zum Trocknen durch einen Bandtrockner geführt werden.

Es hat sich als günstig herausgestellt, die mit dem Bremskolben zusammenwirkende Dichtfläche jedes Dichtringes vor dem Beschichten mit Lack aufzurauhen. Auf diese Weise werden in der Dichtfläche des Dichtringes taschenförmige Vertiefungen geschaffen, in denen sich beim Beschichten mit Lack Depots mit Festschmierstoff bilden, die über lange Zeit gleichbleibende Eigenschaften der erfindungsmäßen Dichtung garantieren. Alternativ können die taschenförmigen Vertiefungen bereits bei der Herstellung der Dichtringrohlinge oder -halbzeuge erzeugt werden, insbesondere durch den Einsatz eines Formkernes mit entsprechend ausgestalteter Oberfläche, die sich beim Verfestigen der Elastomermasse in letzterer abbildet.

Soll der Bremskolben mit Lack beschichtet werden, wird erfindungsgemäß bevorzugt der Lack durch Sprühen auf den Bremskolben aufgebracht. Dann wird die auf den Bremskolben aufgebrachte Lackschicht zur Erhöhung ihrer Stabilität und Abriebfestigkeit eingebrannt, wobei ein Trocknen des aufgebrachten Lackes und Einbrennen desselben gleichzeitig erfolgen kann. Vorzugsweise wird die Lackschicht eine halbe Stunde lang bei einer Temperatur von 180 °C eingebrannt.

Die erfindungsgemäße Bremse weist unter einer Vielzahl unterschiedlicher Betriebsbedingungen eine hervorragende Rückstellung des Bremskolbens auf. So besteht bei herkömmlichen Bremsen beispielsweise das Problem, daß der Bremskolben nach einer besonders starken Bremsung nicht mehr ausreichend zurückgestellt wird. Wie erwähnt, muß der Bremskolben bei starken Bremsungen gegenüber dem Dichtungsring durchrutschen, um den erforderlichen, größeren Verschiebeweg zu durchlaufen. Der Dichtring ist jedoch nicht dazu in der Lage, den Bremskolben um den gleichen Betrag zurückzustellen. Dies führt dazu, daß der Reibbelag auch bei entlasteter Bremse noch an der Bremsscheibe schleift, wodurch es neben einem erhöhten Kraftstoffverbrauch zur Überhitzung und damit zum Ausfall der Bremsanlage kommen kann.

Bei erfindungsgemäßen Bremsen tritt dieses Problem praktisch nicht mehr auf. Zwar ist auch hier der Dichtungsring nicht dazu in der Lage, den Bremskolben nach starken Bremsungen eine entsprechende Strecke zurückzustellen, jedoch haben Versuchsergebnisse ergeben, daß es bei Verwendung eines erfindungsgemäß beschichteten Dichtringes nach starken Bremsungen dennoch zu einem ausreichend großen Lüftspiel kommt, der Reibbelag also nicht mehr an der Bremsscheibe schleift. Zurückgeführt wird dies auf ein gutes Gleitverhalten zwischen dem Dichtring und der Mantelfläche des Bremskolbens, ohne daß hierdurch jedoch die Rückstellfähigkeit des erfindungsgemäßen Dichtringes bei normalen, nicht sehr starken Bremsungen leidet.

Erfindungsgemäße Bremsen und erfindungsgemäß ausgestattete Dichtringe eignen sich daher besonders für kommende Generationen von Kraftfahrzeugen, bei denen die Kraftstoffersparnis im Vordergrund steht und bei denen es deshalb darauf ankommt, unter allen Umständen ein Schleifen der Bremsbeläge an den Bremsscheiben oder anderen abzubremsenden Gliedern zu verhindern. Hochrechnungen haben ergeben, daß durch die Verminderung der Restschleifmomente der Kraftstoffverbrauch eines Pkw um bis zu einem halben Liter auf einhundert Kilometer verringert werden kann. Um eine Kraftstoffeinsparung in derselben Größenordnung durch eine Verminderung des Fahrzeuggewichtes zu erzielen, muß letzteres um etwa 100 kg verringert werden, was nur mit einem erheblichen konstruktiven und materialtechnischen Aufwand zu erreichen ist.

Im folgenden werden ein Ausführungsbeispiel einer erfindungsgemäßen Fahrzeugbremse und daran gewonnene Versuchsdaten näher erläutert. Es zeigt:
- Fig. 1: eine erfindungsgemäße Scheibenbremse im Schnitt,
- Fig. 2: eine Ausschnitt aus Fig. 1 in vergrößerter Darstellung, wobei sich die Bremse in gelöstem Zustand befindet,
- Fig. 3: eine der Fig. 2 entsprechende Darstellung, die jedoch die Bremse in betätigtem Zustand wiedergibt,
- Fig. 4: im Querschnitt eine vergrößerte Darstellung der Nut, in der der Dichtungsring gehalten ist,
- Fig. 5: ein Diagramm, das für verschiedene Dichtungsringe den Hydraulikdruck angibt, der zur Erzielung eines bestimmten Bremskolbenverschiebeweges erforderlich ist, wobei das Diagramm sich auf einen Zustand unmittelbar nach dem Zusammenbau der Bremse bezieht,
- Fig. 6: ein Diagramm für die Dichtungsringe aus Fig. 5, das die Kraft zeigt, die zum Zurückstellen des herausgefahrenen Bremskolbens um eine bestimmte Strecke erforderlich ist, wobei sich dieses Diagramm ebenfalls auf einen Zustand unmittelbar nach dem Zusammenbau der Bremse bezieht,
- Fig. 7: ein Diagramm entsprechend Fig. 5, aufgenommen jedoch nach einer Lagerzeit der zusammengebauten Bremse von drei Tagen,
- Fig. 8: ein Diagramm entsprechend Fig. 6, ebenfalls aufgenommen nach einer dreitägigen Lagerzeit der Bremse,
- Fig. 9: ein weiteres Diagramm entsprechend Fig. 5, aufgenommen nach einer Lagerzeit der Bremse von sieben Tagen,
- Fig. 10: ein weiteres Diagramm entsprechend Fig. 6, ebenfalls aufgenommen nach einer siebentägigen Lagerzeit der Bremse,
- Fig. 11: ein Diagramm, das den bei einem bestimmten Hydraulikdruck erreichten Verschiebeweg des Bremskolbens und das nach Bremsentlastung erzielte Lüftspiel zeigt, wobei die in dem Diagramm gezeigten Daten unmittelbar nach dem Zusammenbau der Bremse gewonnen worden sind, und
- Fig. 12: ein Diagramm entsprechend Fig. 11, aufgenommen nach einer Lagerzeit der Bremse von sieben Tagen.

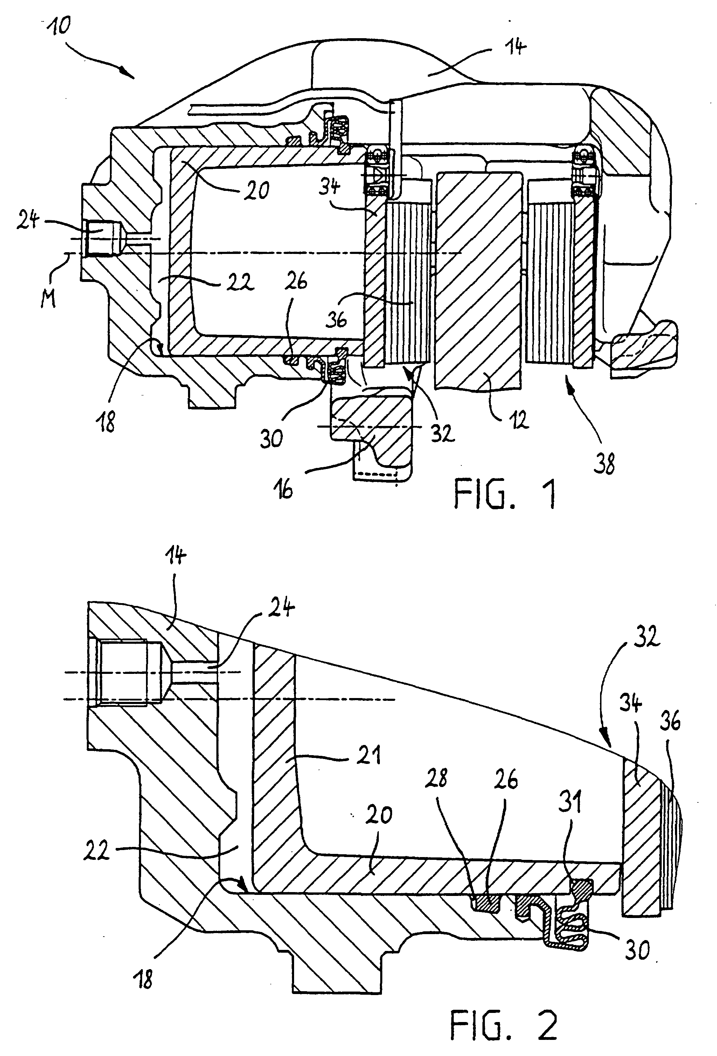

In Fig. 1 sind die zum Verständnis der vorliegenden Erfindung wichtigen Teile einer Schwimmsattel-Teilbelagscheibenbremse 10 im Schnitt dargestellt. Die Erfindung ist jedoch ebensogut auf andere Scheibenbremsentypen anwendbar, beispielsweise auf eine Festsattelscheibenbremse.

Die Scheibenbremse 10 weist eine Bremsscheibe 12 auf, die sich um eine hier nicht dargestellte Achse drehen kann und die von einem hier als Schwimmsattel ausgestalteten Gehäuse 14 übergriffen wird. Das Gehäuse 14 ist parallel zur Drehachse der Bremsscheibe 12 verschiebbar an einem Bremsträger 16 gehalten, der seinerseits zur Befestigung der Scheibenbremse 10 an einem Fahrzeug dient.

In dem Gehäuse 14 ist eine hier zylindrische Bohrung 18 ausgebildet, deren Mittelachse M parallel zur Drehachse der Bremsscheibe 12 verläuft. In der Bohrung 18 ist gleitend verschiebbar ein zylindrischer Bremskolben 20 aufgenommen, der als Hohlkolben ausgeführt ist. Die Bohrung 18 und der Boden 21 des Bremskolbens 20 begrenzen zusammen eine Kammer 22, in die durch eine Zuführung 24 Hydraulikfluid einleitbar ist.

Der Bremskolben 20 ist in der Bohrung 18 durch einen Dichtring 26 aus Elastomermaterial abgedichtet, der in einer Ringnut 28 gehalten ist, die nahe dem offenen Ende der Bohrung 18 in der Bohrungswandung ausgebildet ist. Eine ebenfalls aus Elastomermaterial bestehende Staubschutzmanschette 30, die einerseits in der Bohrungswandung und andererseits in einer Nut 31 am Bremskolben 20 festgelegt ist, sorgt dafür, daß kein Schmutz oder andere unerwünschte Stoffe zwischen den Bremskolben 20 und die Bohrungswandung gelangen, die einen frühzeitigen Verschleiß der Gleitfläche bewirken würden.

Der Dichtring 26 ist mit einem Lack beschichtet, der ein organisches Bindemittel und einen Festschmierstoff auf der Basis von Polytetrafluorethylen enthält. Wie aus Fig. 2 ersichtlich ist, wird der ursprünglich quadratische Querschnitt des Dichtrings 26 durch den Bremskolben 20 zu einem rechteckigen Querschnitt verformt. Auf diese Weise wird eine einwandfreie Abdichtung zwischen dem Bremskolben 20 und der Bohrung 18 erreicht. Der Querschnitt des Dichtrings 26 füllt den Querschnitt der Ringnut 28 bis auf einen geringen Freiraum aus.

Alternativ oder zusätzlich ist auch der Bremskolben 20, genauer dessen äußere Mantelfläche, mit dem vorgenannten Lack beschichtet. Die aufgebrachte Lackschicht, die zur besseren Abriebfestigkeit eingebrannt ist, bedeckt dabei auch den Übergangsbereich zwischen der Mantelfläche und dem Kolbenboden 21 des Bremskolbens 20, so daß das Einschieben des Bremskolbens in die Bohrung 18 beim Zusammenbau der Bremse 10 leicht möglich ist. Die Lackschicht ist also von der Mantelfläche des Bremskolbens 20 bis auf den Rand des Kolbenbodens 21 gezogen. Desweiteren ist insbesondere auch die Nut 31, in der die Schutzmanschette 30 am Bremskolben 20 gehalten ist, mit dem Lack beschichtet. Dadurch ist erreicht, daß der Bremskolben 20 bei montierter Schutzmanschette 30 gedreht werden kann, ohne daß sich die Schutzmanschette 30 mit- und verdreht. Wichtig ist dies bei Bremsen, bei denen der Bremskolben zum Wechseln der Bremsbeläge in den Zylinder hineingedreht werden muß, um den Bremskolben zurückzustellen. Dies ist beispielsweise bei mit Feststellbremsen ausgestatteten Hinterradscheibenbremsen oft der Fall. Zur Unterstützung der relativen Drehbarkeit zwischen Bremskolben und Schutzmanschette kann zusätzlich der in die Nut 31 eingreifende Teil der Schutzmanschette 30 mit dem Lack beschichtet sein.

Der Bremskolben 20 wirkt mit seinem offenen Ende auf einen Bremsbelag 32 ein, der aus einer Belagträgerplatte 34 und einem darauf befestigten Reibbelag 36 besteht.

Zur Betätigung der Scheibenbremse 10 wird der Kammer 22 unter Druck stehendes Hydraulikfluid zugeführt. Der Bremskolben 20 verschiebt sich dadurch in Richtung auf die Bremsscheibe 12, so daß der Bremsbelag 32 bzw. sein Reibbelag 36 in Anlage mit der Bremsscheibe 12 gebracht wird. Nachdem der Bremsbelag 32 sich an die Bremsscheibe 12 angelegt hat, bewirkt die entstehende Reaktionskraft ein Verschieben des Gehäuses 14 in Gegenrichtung, wodurch auch ein zweiter, jenseits der Bremsscheibe 12 angeordneter Bremsbelag 38 an die Bremsscheibe 12 angelegt wird. Beide Bremsbeläge 32 und 38 sind axial in dem Bremsträger 16 geführt, in den auch die beim Bremsen entstehenden Umfangskräfte eingeleitet werden. Die Funktionsweise der dargestellten Scheibenbremse 10 ist jedem Fachmann auf diesem Gebiet geläufig und braucht daher nicht näher erläutert zu werden.

Unter Bezugnahme auf die Figuren 2 bis 4 wird im folgenden näher erläutert, wie sich der Elastomerdichtring 26 beim Betätigen der Scheibenbremse 10 und nach Beendigung eines Bremsvorganges verhält. Fig. 2 gibt dabei einen Zustand wieder, in dem die Bremse 10 gelöst, d.h. unbetätigt ist. Zwischen der Belagträgerplatte 34 und dem offenen Ende des Bremskolbens 20 ist deshalb ein kleiner Spalt sichtbar.

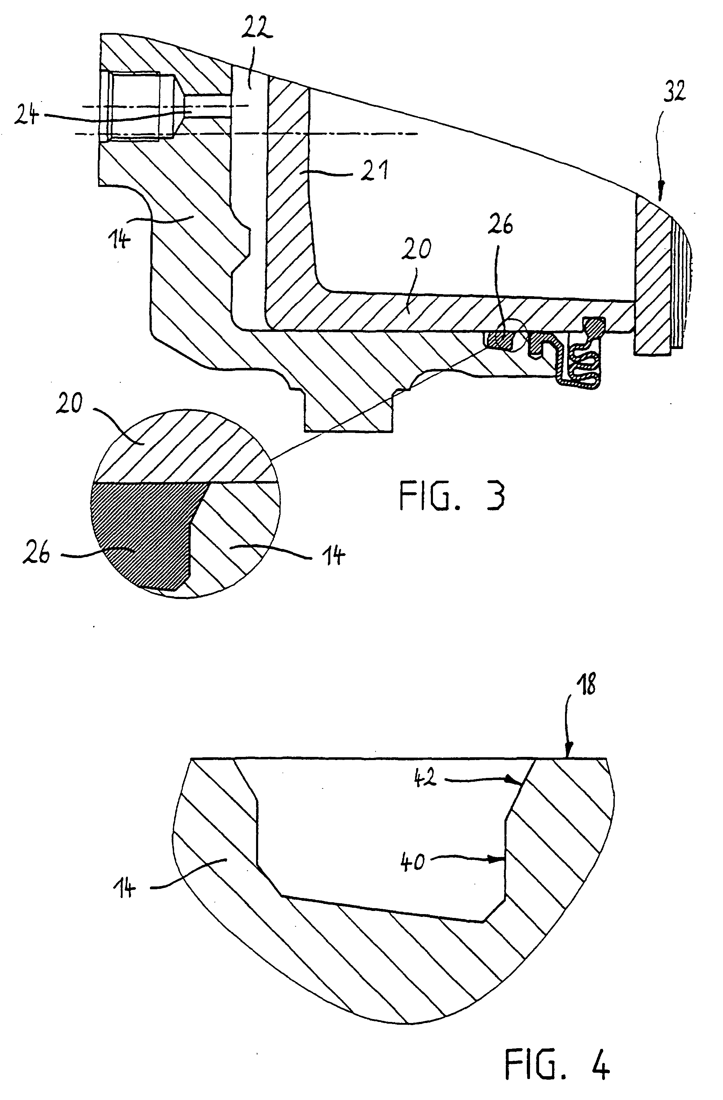

Bei Betätigung der Bremse 10 wird, wie bereits erwähnt, zunächst der Bremskolben 20 in Richtung auf die Bremsscheibe 12, d.h. aus der Bohrung 18 heraus verschoben. Diese Verschiebung führt zusammen mit dem Hydraulikdruck, der durch den minimalen Spalt zwischen der äußeren Mantelfläche des Bremskolbens 20 und der Innenwand der Bohrung 18 auf den Dichtring 26 wirkt, zu einer Verformung des Dichtringes 26 (siehe hierzu Fig. 3).

Dabei legt der Dichtring 26 sich zunächst an die in Fig. 4 rechte Seitenwand 40 der Nut 28 an, woraufhin der radial innere Bereich des Dichtrings 26 weiter verformt wird und sich an die ebenfalls aus Fig. 4 ersichtliche Phase 42 anlegt. Die genaue Ausgestaltung der Phase 42 wird konstruktiv festgelegt und hängt unter anderem davon ab, ob es sich um eine Schwimmsatteloder um eine Festsattelscheibenbremse handelt. Bei Schwimmsattelbremsen bildet die Phase 42 häufig die eine Seite eines gleichschenkligen Dreiecks.

Nachdem der Dichtring 26 sich wie beschrieben in der Ringnut 28 verschoben hat, kann es sein, daß der Bremskolben 20 sich schon soweit zur Bremsscheibe 12 hin bewegt hat, daß die gewünschte Bremswirkung erzielt wird. Beim anschließenden Lösen der Bremse strebt dann der Dichtring 26 seine ursprüngliche, unverformte Gestalt an und zieht deshalb den Bremskolben 20 etwas von der Bremsscheibe 12 weg in die Bohrung 18 zurück. Dies führt normalerweise dazu, daß sich zwischen den Bremsbelägen 32 und 38 und der Bremsscheibe 12 ein kleiner Spalt einstellt, der auch als Lüftspiel bezeichnet wird.

Bei starken Bremsvorgängen muß der Bremskolben 20 jedoch, um die gewünschte hohe Bremswirkung zu erzielen, einen größeren Weg in Richtung auf die Bremsscheibe 12 zurücklegen. Dieser Weg kann bei hohem Hydraulikdruck, beispielsweise bei einem Druck von 160 bar, bis zu einem Millimeter betragen. Der größere Verschiebeweg des Bremskolben 20 resultiert aus einer gewissen, bei hohem Hydraulikdruck auftretenden Verformung des Gehäuses 14, aus sich zusammenpressenden Reibbelägen etc. Wird die Bremse nach einem starken Bremsvorgang gelöst, dehnt sich das Reibbelagmaterial wieder aus und die Aufweitung des Gehäuses 14 geht zurück. Der Bremskolben 20 wird durch die Kräfte des wieder expandierenden Reibbelagmaterials und des sich zusammenziehenden Gehäuses 14 zurück in die Bohrung 18 gedrückt, wobei er ebenso wie bei der vorangegangenen Betätigung gegenüber dem Dichtring 26 durchrutscht.

Viele Versuche haben ergeben, daß besonders nach solch starken Bremsungen das Problem eines nicht ausreichenden Lüftspiels besteht. Unter Umständen kann das sich nach einer starken Bremsung einstellende Lüftspiel sogar negative Werte annehmen, d.h. die Reibbeläge schleifen auch bei gelöster Bremse noch an der Bremsscheibe 12, was nicht nur zu erhöhtem Kraftstoffverbrauch, sondern auch zu einer Überhitzung der Bremse und zu anderen Schäden führen kann.

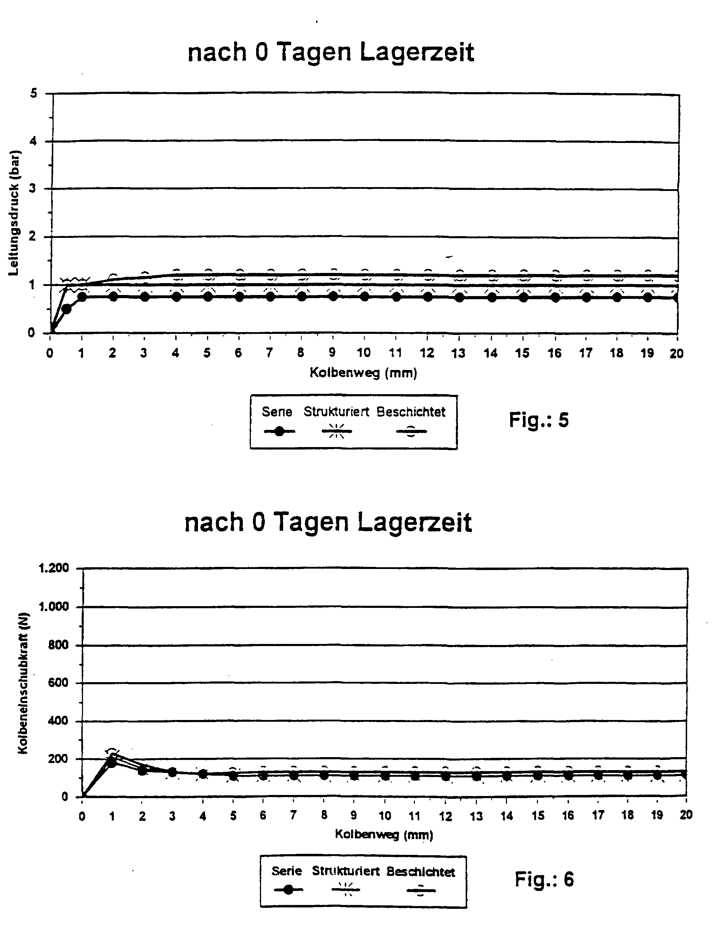

Zur Lösung dieses Problems ist es bereits vorgeschlagen worden, die mit dem Bremskolben 20 zusammenwirkende Dichtfläche des Dichtringes strukturiert auszubilden. Im folgenden wird eine Reihe von Diagrammen näher erläutert, in denen ein solchermaßen strukturierter Dichtring mit einem nicht strukturierten Dichtring und mit einem erfindungsgemäß beschichteten Dichtring 26 verglichen ist. Die Figuren 5 bis 10 zeigen dabei das zeitabhängige Haft- und Gleitverhalten der drei verschiedenen Dichtringe. Mit "Serie" ist der nicht strukturierte Dichtring gemeint, während mit "beschichtet" der erfindungsgemäß beschichtete Dichtring gemeint ist.

In den Figuren 5, 7 und 9 ist der Hydraulikdruck aufgetragen, der notwendig war, um einen Bremskolben 20 mit 54 mm Durchmesser eine bestimmte Strecke (0 bis 20 mm) aus der Bohrung 18 herauszuschieben. In den Figuren 6, 8 und 10 hingegen ist diejenige Kraft aufgetragen, die erforderlich war, um den Bremskolben 20 wieder um die entsprechende Strecke in die Bohrung 18 zurückzuschieben. Sowohl der nicht strukturierte Seriendichtring als auch der strukturierte Dichtring wurden unter Verwendung einer herkömmlichen Montageflüssigkeit montiert. Der beschichtete Dichtring 26 hingegen wurde ohne Montageflüssigkeit montiert.

Direkt nach dem Zusammenbau der Bremse (Figuren 5 und 6) zeigt sich, daß alle drei Dichtringe bezüglich ihrer Haft- und Gleiteigenschaften nahe beieinanderliegen. Zum Herausfahren des Bremskolbens 20 aus der Bohrung 18 (Fig. 5) ist bei Verwendung eines beschichteten Dichtrings 26 generell ein etwas höherer Hydraulikdruck erforderlich als bei Verwendung eines Seriendichtringes. Der strukturierte Dichtring liegt zwischen den beiden vorgenannten Dichtringen. Beim Zurückfahren des Bremskolbens 20 in die Bohrung 18 verhalten sich die drei unterschiedlichen Dichtringe praktisch gleich, zur Überwindung der Haftreibung wird in allen drei Fällen eine Kraft von etwa 200 N benötigt, zur Überwindung der danach einsetzenden Gleitreibung sind nur noch ungefähr 150 N erforderlich.

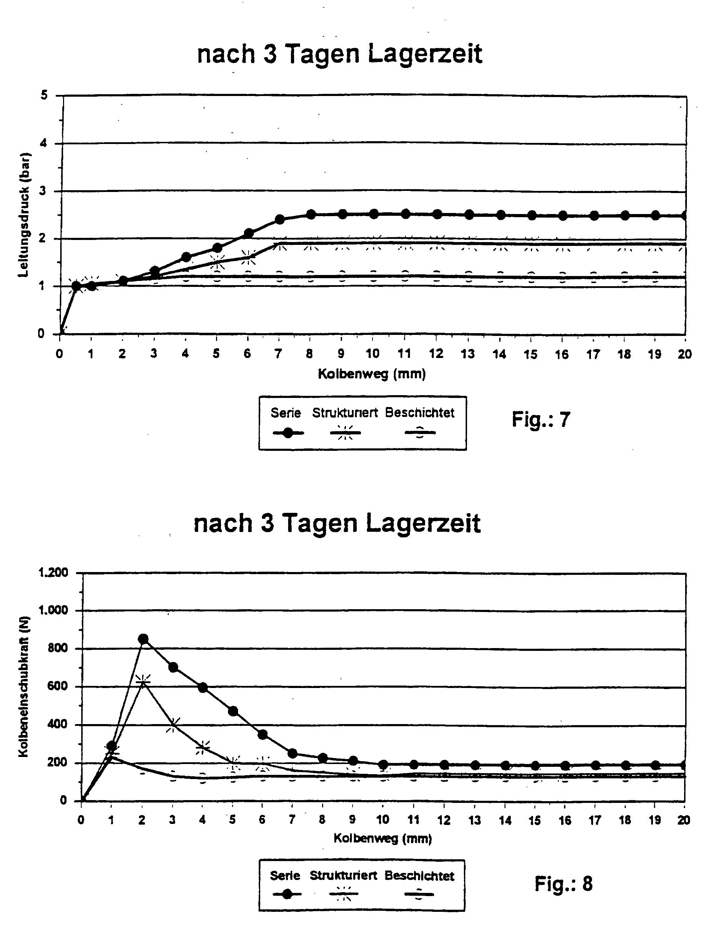

Nach einer Lagerzeit von nur drei Tagen unterscheiden sich die drei verschiedenen Dichtringe in ihrem Haft- und Gleitverhalten schon deutlich (Figuren 7 und 8): Während der zum Herausfahren des Bremskolbens 20 aus der Bohrung 18 (Fig. 7) erforderliche Hydraulikdruck beim beschichteten Dichtring verglichen mit Fig. 5 nahezu unverändert ist, muß bei Verwendung eines strukturierten Dichtringes ein spürbar höherer Hydraulikdruck und bei Verwendung eines unstrukturierten Seriendichtringes ein mehr als doppelt so hoher Hydraulikdruck aufgewandt werden. Beim Zurückfahren des Bremskolbens 20 in die Bohrung 18 nach drei Tagen Lagerzeit (Fig. 8) zeigt sich, daß die zu Beginn des Einschiebevorgangs zu überwindende Haftreibung im Fall des beschichteten Dichtrings 26 wiederum mit dem in Fig. 6 gezeigten Wert nahezu übereinstimmt, während beim strukturierten Dichtring die nahezu dreifache Kraft (ca. 600 N) und beim unstrukturierten Seriendichtring etwa die vierfache Einschubkraft (ca. 850 N) aufgebracht werden muß. Fig. 8 zeigt darüber hinaus, daß der Abfall auf den zur Überwindung der Gleitreibung erforderlichen Kraftwert beim unstrukturierten Seriendichtring und auch beim strukturierten Dichtring deutlich langsamer als beim beschichteten Dichtring 26 stattfindet.

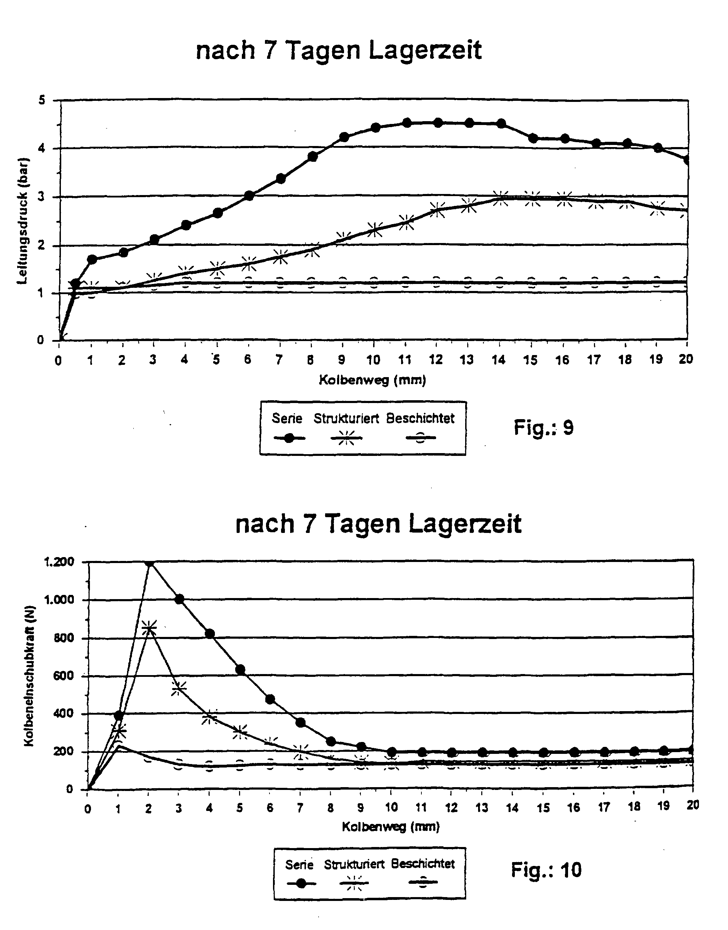

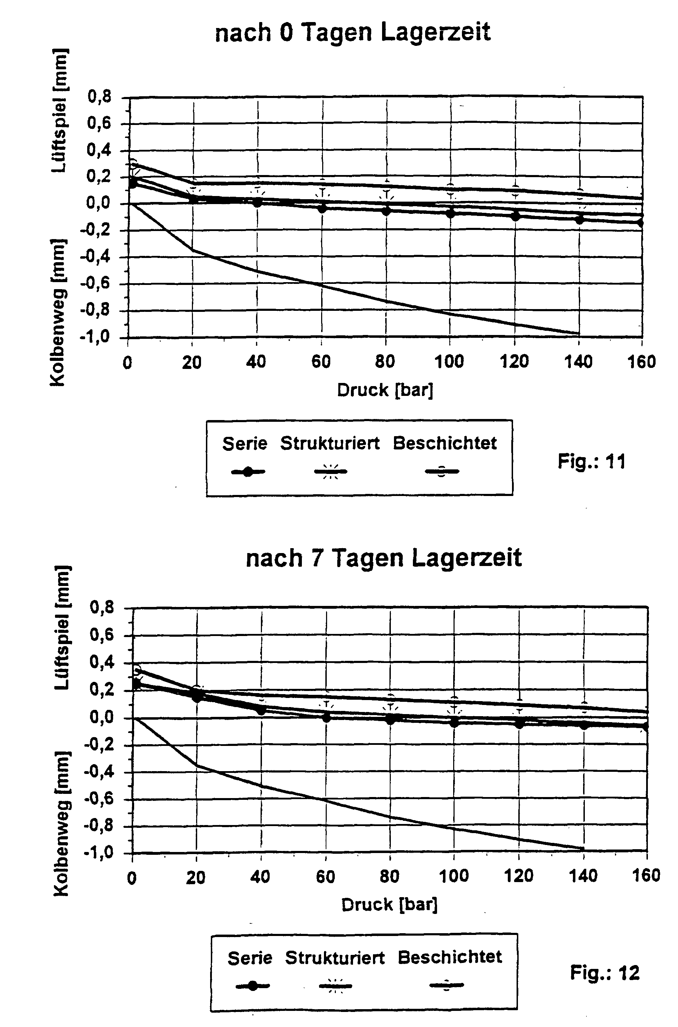

Noch ausgeprägter sind die Unterschiede zwischen den drei verschiedenen Dichtringen nach einer Lagerzeit von sieben Tagen (Figuren 9 und 10): Zum Herausfahren des Bremskolbens 20 aus der Bohrung 18 sind im Falle des unstrukturierten Seriendichtringes und des strukturierten Dichtringes nochmals erheblich höhere Hydraulikdruckwerte erforderlich und auch zum Zurückfahren des Bremskolbens 20 in die Bohrung 18 müssen zu Beginn sehr hohe Haftreibungswerte (strukturierter Dichtring: ca. 850 N; Seriendichtring: 1.200 N) überwunden werden. Das Verhalten des beschichteten Dichtringes 26 hingegen unterscheidet sich auch nach sieben Tagen Lagerzeit nicht meßbar von dem Verhalten direkt nach dem Zusammenbau der Bremse 10.

Aus den Figuren 11 und 12 ist das Lüftspiel entnehmbar, das sich nach unterschiedlich starken Bremsungen, d.h. unterschiedlich hohen Hydraulikdrücken, bei gelöster Bremse einstellt. Im unteren Bereich der in Fig. 11 und Fig. 12 gezeigten Diagramme ist für zunehmenden Hydraulikdruck der Kolbenweg in Millimetern aufgezeichnet, um den der Kolben 20 aus der Bohrung 18 herausbewegt wird. Der Verschiebeweg ist mit negativem Vorzeichen angegeben. Im oberen Bereich der Diagramme ist das sich nach einer Entlastung der Bremse einstellende Lüftspiel zu jedem Betätigungsdruck für die drei unterschiedlichen Dichtringe wiedergegeben. Alle Messungen sind auf einen Nullpunkt des Bremskolbens 20 bezogen, der wie folgt ermittelt wurde: Die Bremse 10 wird mit Bremsbelägen 32 und 38 sowie mit der Bremsscheibe 12 zusammengebaut. Zwischen den Bremsbelag 32 und den Bremskolben 20 wird ein 2 mm starkes Stahlblech gelegt. Die Bremse 10 wird dann mit einem Hydraulikdruck von 100 bar betätigt, damit die Teile der Bremse sich setzen können. Nach einigen Sekunden wird der Hydraulikdruck auf Null reduziert. Das Stahlblech wird daraufhin entfernt. Anschließend wird der Bremskolben 20 mit einem Hydraulikdruck beaufschlagt, der gerade dazu ausreicht, den Kolben 20 aus der Bohrung 18 herauszubewegen und den Bremsbelag 32 an die Bremsscheibe 12 anzulegen. Dieser Druck wird als Anlegedruck bezeichnet. Er hat einen Wert im Bereich von 1 bis 3 bar. Die so erzielte Stellung des Bremskolbens 20 wird als Nullstellung bezeichnet. Der Ordinatennullpunkt in den Diagrammen gemäß Fig. 11 und 12 entspricht dieser Nullstellung.

Nach der Festlegung dieses Nullpunktes wird der Hydraulikdruck auf Null abgebaut. Der Bremskolben 20 bewegt sich dabei abhängig von der verwendeten Dichtung etwas in die Bohrung 18 hinein, wodurch sich ein Lüftspiel bildet. Für den Seriendichtring sowie den strukturierten Dichtring wurde ein sich einstellendes Lüftspiel von 0,25 mm ermittelt, während das sich mit dem beschichteten Dichtring 26 einstellende Lüftspiel 0,35 mm betrug.

Sodann wurden die Betätigungsdrücke in Stufen von 20 bar erhöht, wobei nach Erreichen des jeweiligen Enddruckes der Druck immer wieder auf Null zurückgefahren wurde.

Sowohl der Fig. 11, die das Verhalten direkt nach dem Zusammenbau zeigt, als auch der Fig. 12, die das Verhalten nach einer siebentägigen Lagerzeit wiedergibt, läßt sich entnehmen, daß selbst nach einer Betätigung mit relativ geringem Hydraulikdruck (20 bar) sich bei der anschließenden Entlastung der Bremse nicht mehr das ursprüngliche Lüftspiel einstellt. Dieses Verhalten trifft auf alle drei untersuchten Dichtringe zu und ist umso ausgeprägter, je höher der Betätigungsdruck ist.

Fig. 11 zeigt darüber hinaus, daß direkt nach dem Zusammenbau der Bremse bei Verwendung des Seriendichtringes bzw. des strukturierten Dichtringes bereits im Anschluß an eine Betätigung mit etwa 60 bis 80 bar Hydraulikdruck negative Lüftspiele auftreten, d.h. der Bremskolben 20 erreicht bei seiner Zurückbewegung in die Bohrung nicht einmal mehr seine Nullstellung, was dazu führt, daß die Bremsbeläge 32 und 38 mehr oder weniger stark an der Bremsscheibe 12 anliegen. Die das Lüftspiel wiedergebenden Kurven verlaufen in Bereichen negativen Lüftspiels unterhalb der Null-Linie.

Nach einer siebentägigen Lagerzeit (Fig. 12) hat sich die Situation für den Seriendichtring und auch den strukturierten Dichtring hinsichtlich negativer Lüftspiele etwas verbessert, jedoch muß ab einem Betätigungsdruck von etwa 80 bar nach der Entlastung der Bremse immer noch mit negativen Lüftspielen gerechnet werden.

Einzig die Verwendung des beschichteten Dichtrings 26 gewährleistet sowohl direkt nach dem Zusammenbau als auch nach einer siebentägigen Lagerzeit das Erreichen positiver Lüftspiele selbst nach Betätigungsdrücken von 160 bar.

In Abweichung von der in den Figuren 11 und 12 für den beschichteten Dichtring wiedergegebenen Lüftspielkurven kann aufgrund seiner vorteilhaften Eigenschaften das Anfangslüftspiel auch kleiner gewählt werden, d.h. der Schnittpunkt der Geraden mit der Abszisse kann etwas zu niedrigeren Betätigungsdrücken hin verschoben werden. Auf diese Weise läßt sich ein guter Kompromiß zwischen den gegensätzlichen Forderungen nach geringem Pedalbetätigungsweg (erfordert möglichst geringes Lüftspiel) und sich allzeit lösender Bremse (erfordert größeres Lüftspiel) finden.

## Patentansprüche

1. Bremse (10) für eine hydraulische Fahrzeugbremsanlage, mit einem Gehäuse (14) und einer darin ausgebildeten Bohrung (18), in der ein Bremskolben (20) abdichtend und gleitend verschiebbar aufgenommen ist, der mittels Hydraulikdruck einen Bremsbelag (32) gegen eine Bremsscheibe (12) pressen kann, wobei der Bremskolben (20) gegenüber der Bohrung (18) durch einen Dichtring (26) aus elastischem Material abgedichtet ist,
**dadurch gekennzeichnet, daß** der Dichtring (26) und/oder wenigstens die Mantelfläche des Bremskolbens (20) mit einem Lack beschichtet sind, der ein organisches Bindemittel und einen Festschmierstoff enthält.

2. Bremse nach Anspruch 1,
**dadurch gekennzeichnet, daß** der Festschmierstoff ein auf Polytetrafluorethylen, Graphit oder Molybdändisulfid basierender Festschmierstoff ist.

3. Bremse nach Anspruch 1 oder 2,
**dadurch gekennzeichnet, daß** auch der Übergangsbereich zwischen der Mantelfläche und dem Kolbenboden (21) des Bremskolbens (20) mit dem Lack beschichtet ist.

4. Bremse nach einem der Ansprüche 1 bis 3,
**dadurch gekennzeichnet, daß** eine in der Mantelfläche des Bremskolbens (20) ausgebildete und zur Aufnahme einer Schutzmanschette bestimmte Nut (31) mit dem Lack beschichtet ist.

5. Bremse nach einem der vorhergehenden Ansprüche,
**dadurch gekennzeichnet, daß** die auf den Bremskolben (20) aufgebrachte Lackschicht eingebrannt ist.

6. Bremse nach einem der vorhergehenden Ansprüche,
**dadurch gekennzeichnet, daß** die Lackschicht eine Dicke im Bereich von 5 µm bis 15 µm aufweist.

7. Elastomerdichtring (26) für eine Bremse gemäß einem der vorhergehenden Ansprüche,
**dadurch gekennzeichnet, daß** der Dichtring (26) mit einem Lack beschichtet ist, der ein organisches Bindemittel und einen Festschmierstoff enthält.

8. Dichtring nach Anspruch 7,
**dadurch gekennzeichnet, daß** der Festschmierstoff ein auf Polytetrafluorethylen, Graphit oder Molybdändisulfid basierender Festschmierstoff ist.

9. Dichtring nach Anspruch 7 oder 8,
**dadurch gekennzeichnet, daß** die Lackschicht eine Dicke im Bereich von 5 µm bis 15 µm aufweist.

10. Verfahren zur Herstellung eines Dichtringes gemäß einem der Ansprüche 7 bis 9, mit den Schritten:
- Einbringen von Elastomerdichtringen in eine Trommel,
- allseitiges Benetzen der Dichtringe mit einem flüssigen Lack, der ein organisches Bindemittel und einen Festschmierstoff enthält, durch Drehen der Trommel, wobei sich der flüssige Lack in der Trommel befindet oder in die Trommel gesprüht wird,
- Entfernen überschüssigen Lackes von den Dichtringen durch schnelles Drehen der Trommel und Ablassen des flüssigen Lackes aus der Trommel,
- Trocknen der mit Lack beschichteten Dichtringe.

11. Verfahren nach Anspruch 10,
**dadurch gekennzeichnet, daß** der flüssige Lack als Lösemittel ein Gemisch aus Ester und Alkohol enthält.

12. Verfahren nach Anspruch 10 oder 11,
**dadurch gekennzeichnet, daß** der flüssige Lack bis zu 20 Gew.-% organisches Bindemittel mit Festschmierstoff und etwa 80 Gew.-% Lösemittel enthält.

13. Verfahren nach einem der Ansprüche 10 bis 12,
**dadurch gekennzeichnet, daß** der Festschmierstoff ein auf Polytetrafluorethylen, Graphit oder Molybdändisulfid basierender Festschmierstoff ist.

14. Verfahren nach einem der Ansprüche 10 bis 13,
**dadurch gekennzeichnet, daß** die Dichtfläche jedes Dichtrings vor dem Beschichten mit Lack zur Bildung taschenförmiger Vertiefungen aufgerauht wird.

15. Verfahren nach einem der Ansprüche 10 bis 13,
**dadurch gekennzeichnet, daß** die Dichtfläche jedes Dichtrings bereits bei der Herstellung der Dichtringrohlinge oder -halbzeuge mit taschenförmigen Vertiefungen versehen wird, insbesondere durch den Einsatz eines Formkernes mit entsprechend ausgestalteter Oberfläche.

16. Verfahren nach einem der Ansprüche 10 bis 14,
**dadurch gekennzeichnet, daß** die auf den Dichtring aufgebrachte Lackschicht bei einer Temperatur von bis zu 110 °C, insbesondere in einem Bereich von 60 bis 70 °C getrocknet wird.

17. Verfahren zum Beschichten eines Bremskolbens (20) für eine Bremse nach einem der Ansprüche 1 bis 6, mit den Schritten:
- Besprühen der Außenfläche des Bremskolbens mit einem flüssigen Lack, der ein organisches Bindemittel und einen Festschmierstoff enthält, und
- Einbrennen der aufgebrachten Lackschicht.

18. Verfahren nach Anspruch 17,
**dadurch gekennzeichnet, daß** die auf den Bremskolben aufgebrachte Lackschicht 30 Minuten lang bei einer Temperatur von 180 °C eingebrannt wird.

## Claims

1. A brake (10) for a hydraulic vehicle brake system, comprising a housing (14) and a bore (18) formed therein, in which is received in a sealingly and slideably displaceable manner a brake piston (20) which is adapted to press a brake lining (32) against a brake disk (12) by means of hydraulic pressure, the brake piston (20) being sealed off relative to the bore (18) by means of a sealing ring (26) made of elastic material,
**characterized in that** the sealing ring (26) and/or at least the outer surface of the brake piston (20) are/is coated with a lacquer containing an organic binder and a solid lubricant.

2. The brake according to Claim 1,
**characterized in that** the solid lubricant is a solid lubricant based on polytetrafluoroethylene, graphite or molybdenum disulfide.

3. The brake according to Claim 1 or 2,
**characterized in that** the transitional region between the outer surface and the piston head (21) of the brake piston (20) is also coated with the lacquer.

4. The brake according to one of Claims 1 to 3,
**characterized in that** a groove (31) formed in the outer surface of the brake piston (20) and intended for receiving a dust boot is coated with the lacquer.

5. The brake according to one of the preceding claims,
**characterized in that** the lacquer layer applied to the brake piston (20) is baked.

6. The brake according to one of the preceding claims,
**characterized in that** the lacquer layer has a thickness in the range of 5 µm to 15 µm.

7. An elastomeric sealing ring (26) for a brake according to one of the preceding claims,
**characterized in that** the sealing ring (26) is coated with a lacquer which contains an organic binder and a solid lubricant.

8. The sealing ring according to Claim 7,
**characterized in that** the solid lubricant is a solid lubricant based on polytetrafluoroethylene, graphite or molybdenum disulfide.

9. The sealing ring according to Claim 7 or 8,
**characterized in that** the lacquer layer has a thickness in the range of 5 µm to 15 µm.

10. A method for producing a sealing ring according to one of Claims 7 to 9, comprising the steps:
- introducing elastomeric sealing rings into a drum,
- all-round wetting of the sealing rings with a liquid lacquer, which contains an organic binder and a solid lubricant, by rotating the drum, the liquid lacquer being located in the drum or being sprayed into the drum,
- removing excess lacquer from the sealing rings by rapidly rotating the drum and draining the liquid lacquer out of the drum,
- drying the sealing rings coated with lacquer.

11. The method according to Claim 10,
**characterized in that** the liquid lacquer contains a mixture of ester and alcohol as solvent.

12. The method according to Claim 10 or 11,
**characterized in that** the liquid lacquer contains up to 20% by weight of organic binder with solid lubricant and about 80% by weight of solvent.

13. The method according to one of Claims 10 to 12,
**characterized in that** the solid lubricant is a solid lubricant based on polytetrafluoroethylene, graphite or molybdenum disulfide.

14. The method according to one of Claims 10 to 13,
**characterized in that**, before coating with lacquer, the sealing surface of each sealing ring is roughened in order to form pocket-like depressions.

15. The method according to one of Claims 10 to 13,
**characterized in that** the sealing surface of each sealing ring is provided with pocket-like depressions as early as during the production of the blanks or semi-finished articles for the sealing rings, in particular by the use of a mold core having an appropriately designed surface.

16. The method according to one of Claims 10 to 14,
**characterized in that** the lacquer layer applied to the sealing ring is dried at a temperature of up to 110°C, in particular in a range of 60 to 70°C.

17. A method for coating a brake piston (20) for a brake according to one of Claims 1 to 6, comprising the steps:
- spraying the outer surface of the brake piston with a liquid lacquer which contains an organic binder and a solid lubricant, and
- baking the applied lacquer layer.

18. The method according to Claim 17,
**characterized in that** the lacquer layer applied to the brake piston is baked for 30 minutes at a temperature of 180°C.

## Revendications

1. Frein (10) pour un système de freinage de véhicule hydraulique, comprenant un boîtier (14) et un alésage (18) formé dans celui-ci, dans lequel un piston de freinage (20) peut être déplacé par coulissement de façon étanche qui peut presser au moyen d'une pression hydraulique une garniture de frein (32) contre un disque de frein (12), l'étanchéité entre le piston de freinage (20) et l'alésage (18) étant réalisée par une bague d'étanchéité (26) en matériau souple,
**caractérisé en ce que** la bague d'étanchéité (26) et / ou au moins la surface extérieure du piston de freinage (20) sont revêtues avec une laque qui contient un liant organique et un lubrifiant solide.

2. Frein selon la revendication 1,
**caractérisé en ce que** le lubrifiant solide est un lubrifiant solide à base de polytétrafluoréthylène, de graphite ou de bisulfure de molybdène.

3. Frein selon la revendication 1 ou 2,
**caractérisé en ce que** la zone de transition entre la surface extérieure et la tête de piston (21) du piston de freinage (20) est revêtue avec la laque.

4. Frein selon l'une quelconque des revendications 1 à 3,
**caractérisé en ce qu'**une gorge (31) formée dans la surface extérieure du piston de freinage (20) et destinée à recevoir une manchette de protection est revêtue avec la laque.

5. Frein selon l'une quelconque des revendications précédentes,
**caractérisé en ce que** la couche de laque appliquée sur le piston de freinage (20) est recuite.

6. Frein selon l'une quelconque des revendications précédentes,
**caractérisé en ce que** la couche de laque présente une épaisseur située dans la plage de 5 µm à 15 µm.

7. Bague d'étanchéité en élastomère (26) pour un frein selon l'une quelconque des revendications précédentes,
**caractérisée en ce que** la bague d'étanchéité (26) est revêtue avec une laque qui contient un liant organique et un lubrifiant solide.

8. Bague d'étanchéité selon la revendication 7,
**caractérisée en ce que** le lubrifiant solide est un lubrifiant solide à base de polytétrafluoréthylène, de graphite ou de bisulfure de molybdène.

9. Bague d'étanchéité selon la revendication 7 ou 8,
**caractérisée en ce que** la couche de laque présente une épaisseur située dans la plage de 5 µm à 15 µm.

10. Procédé de fabrication d'une bague d'étanchéité selon l'une quelconque des revendications 7 à 9, comprenant les opérations consistant à :
- introduire des bagues d'étanchéité en élastomère dans un tambour,
- mouiller de tous côtés les bagues d'étanchéité avec une laque liquide qui contient un liant organique et un lubrifiant solide en faisant tourner le tambour, la laque liquide se trouvant dans le tambour ou étant aspergée dans le tambour,
- éliminer laque excédentaire des bagues d'étanchéité en faisant tourner rapidement le tambour et évacuer la laque liquide du tambour,
- sécher les bagues d'étanchéité revêtues avec la laque.

11. Procédé selon la revendication 10,
**caractérisé en ce que** la laque liquide contient un solvant qui est un mélange d'ester et d'alcool.

12. Procédé selon la revendication 10 ou 11,
**caractérisé en ce que** la laque liquide contient jusqu'à 20 % en poids de liant organique avec le lubrifiant solide et environ 80 % en poids de solvant.

13. Procédé selon l'une quelconque des revendications 10 à 12,
**caractérisé en ce que** le lubrifiant solide est un lubrifiant solide à base de polytétrafluoréthylène, de graphite ou de bisulfure de molybdène.

14. Procédé selon l'une quelconque des revendications 10 à 13,
**caractérisé en ce que** la surface d'étanchéité de chaque bague d'étanchéité est rendue rugueuse avant le revêtement avec la laque de façon à former des creux en forme de poches.

15. Procédé selon l'une quelconque des revendications 10 à 13,
**caractérisé en ce que** la surface d'étanchéité de chaque bague d'étanchéité est déjà pourvue de creux en forme de poches lors de la fabrication des ébauches ou des demi-produits de bagues d'étanchéité, en particulier en utilisant un noyau de moule présentant une surface configurée en conséquence.

16. Procédé selon l'une quelconque des revendications 10 à 14,
**caractérisé en ce que** la couche de laque appliquée sur la bague d'étanchéité est séchée à une température allant jusqu'à 110 °C, en particulier située dans une plage de 60 à 70 °C.

17. Procédé pour revêtir un piston de freinage (20) pour un frein selon l'une quelconque des revendications 1 à 6, comprenant les opérations consistant à :
- arroser la surface extérieure du piston de freinage avec une laque liquide qui contient un liant organique et un lubrifiant solide, et
- recuire la couche de laque appliquée.

18. Procédé selon la revendication 17,
**caractérisé en ce que** la couche de laque appliquée sur le piston de freinage est recuite pendant 30 minutes à une température de 180 °C.
